# EUROPÄISCHE PATENTSCHRIFT

(11) **EP 2 046 184 B1**
(45) Veröffentlichungstag und Bekanntmachung des Hinweises auf die Patenterteilung: **15.01.2014**
(21) Anmeldenummer: 06776510.7
(22) Anmeldetag: 29.07.2006
(51) Int. Cl.: A47L 9/20

(54) **VERFAHREN ZUM ABREINIGEN DER FILTER EINES STAUBSAUGERS SOWIE STAUBSAUGER ZUR DURCHFÜHRUNG DES VERFAHRENS**
METHOD FOR CLEANING THE FILTERS OF A VACUUM CLEANER AND VACUUM CLEANER FOR CARRYING OUT THE METHOD
PROCEDE POUR NETTOYER LE FILTRE D'UN ASPIRATEUR ET ASPIRATEUR POUR METTRE EN OEUVRE LE PROCEDE

(43) Veröffentlichungstag der Anmeldung: 15.04.2009
(73) Patentinhaber: Alfred Kärcher GmbH & Co. KG, 71364 Winnenden (DE)
(72) Erfinder: ECKSTEIN, Daniel, 71364 Winnenden-Baach (DE); LANGEN, Thorsten, 70190 Stuttgart (DE)
(74) Vertreter: Karrais, Martin
(86) Internationale Anmeldenummer: PCT/EP2006/007545
(87) Internationale Veröffentlichungsnummer: WO 2008/014798

(56) Entgegenhaltungen:
- EP-A- 1 166 705
- WO-A-97/19630
- WO-A-2004/100752
- DE-U1- 29 823 411

## Beschreibung

Die Erfindung betrifft ein Verfahren zum Abreinigen der Filter eines Staubsaugers mit einem Schmutzsammelbehälter, der einen Saugeinlass aufweist und über mindestens ein Filter und zumindest eine Absaugleitung mit mindestens einem Saugaggregat in Strömungsverbindung steht, und mit mindestens einem stromabwärts des mindestens einen Filters in die Absaugleitung einmündenden Fremdlufteinlass, der mittels zumindest einem Schließventil verschließbar ist, wobei das mindestens eine Schließventil einen zwischen einer Schließstellung und einer Offenstellung hin- und herbewegbaren, von einer Schließfeder mit einer Schließkraft beaufschlagten Ventilkörper aufweist, der in der Schließstellung an einem Ventilsitz anliegt und in der Offenstellung zum Ventilsitz beabstandet ist, wobei man zur Abreinigung des mindestens einen Filters zumindest ein Schließventil öffnet und die dem Schmutzsammelbehälter abgewandte Seite des mindestens einen Filters mit Fremdluft beaufschlagt.

Die Erfindung betrifft außerdem einen Staubsauger zur Durchführung des Verfahrens.

Mittels der hier in Rede stehenden Staubsauger kann Schmutz und vorzugsweise auch Flüssigkeit aufgesaugt werden, indem man den Schmutzsammelbehälter mit Hilfe von mindestens einem Saugaggregat mit Unterdruck beaufschlagt, so dass sich eine Saugströmung ausbildet und Schmutz und Flüssigkeit in den Schmutzsammelbehälter eingesaugt werden können. Die Staubsauger weisen ein oder mehrere Filter auf, die im Strömungsweg zwischen dem Schmutzsammelbehälter und dem mindestens einen Saugaggregat angeordnet sind und der Abscheidung von Feststoffen aus der Saugströmung dienen. Wahrend des Saugbetriebes lagern sich zunehmend Schmutzteilchen an der dem Schmutzsammelbehälter zugewandten Seite des mindestens einen Filters an, so dass das bzw. die Filter nach einiger Zeit abgereinigt werden müssen. Zur Abreinigung kann die dem Schmutzsammelbehälter abgewandte Seite der Filter mit Fremdluft beaufschlagt werden, indem mindestens ein Schließventil geöffnet wird, so dass vom Fremdlufteinlass Fremdluft in die mindestens eine Absaugleitung einströmen und die dem Schmutzsammelbehälter abgewandte Seite des mindestens einen Filters beaufschlagen kann.

In der Gebrauchsmusterschrift DE 298 23 411 U1 wird zur Abreinigung eines Filters vorgeschlagen, einen Saugschlauch, der an den Saugeinlass des Schmutzsammelbehälters angeschlossen ist, kurzzeitig zu verschließen, so dass sich im Schmutzsammelbehälter ein starker Unterdruck ausbildet, und anschließend soll ein Schließventil kurzzeitig geöffnet werden. Das Filter wird dann in Gegenstromrichtung, d. h. entgegen der Richtung der während des normalen Saugbetriebes vorherrschende Saugströmung, von der Fremdluft durchströmt, so dass sich am Filter anhaftende Schmutzteilchen ablösen. Dadurch kann eine wirkungsvolle Abreinigung des Filters erzielt werden, allerdings muss hierzu der Saugbetrieb vom Benutzer unterbrochen werden.

In der DE 199 49 095 A1 wird der Einsatz von zwei Filtern vorgeschlagen, die alternativ abgereinigt werden, wobei während der Abreinigung des einen Filters der Saugbetrieb über das andere Filter in eingeschränktem Umfange fortgesetzt werden kann. Dies erfordert allerdings eine aufwendige Konstruktion, wobei die beiden Filter eine erhebliche Baugröße aufweisen müssen, um während des eingeschränkten Saugbetriebes eine ausreichende Saugströmung zu ermöglichen. Außerdem ist die alternative Abreinigung von jeweils einem Filter bei gleichzeitiger Aufrechterhaltung des Saugbetriebes über das andere Filter in vielen Fällen störungsanfällig.

Aus der WO 97/19630 A ist ein Staubsauger bekannt mit einem Schmutzsammelbehälter, an dessen Saugauslass ein Filter angeordnet ist. Zum Abreinigen kann das Filter entgegen der während des Saugbetriebes vorherrschenden Strömungsrichtung von Fremdluft durchströmt werden. Hierzu weist der Staubsauger einen in die Absaugleitung einmündenden Fremdlufteinlass auf, der mittels eines Schließventils verschließbar ist. Das Schließventil umfasst einen Ventilkörper, der von einer Schließfeder mit einer Schließkraft beaufschlagt wird und der in jeder Stellung an einem federnden Anschlagelement anliegt. Die Kraft des Anschlagelements wirkt ebenso wie die Federkraft der Schließfeder permanent auf den Ventilkörper ein. Um in seine geöffnete Stellung zu gelangen, muss der Ventilkörper ausgehend von seiner Schließstellung sofort beide Kräfte überwinden.

Aufgabe der vorliegenden Erfindung ist es, ein Verfahren der eingangs genannten Art bereitzustellen, bei dem während des Saugbetriebes sämtliche vorhandenen Filter mit Saugluft durchströmt werden können, der Saugbetrieb zur Filterabreinigung aber für den Benutzer nicht merklich unterbrochen werden muss.

Diese Aufgabe wird bei einem Verfahren der gattungsgemäßen Art erfindungsgemäß dadurch gelöst, dass man den Ventilkörper des Schließventils unabhängig von seiner Stellung mit einer Schließkraft der Schließfeder und in einer zum Ventilsitz beabstandeten Stellung zusätzlich mit der Rückstoßkraft eines federnden Anschlagelementes beaufschlagt, wobei das federnde Anschlageleent den Ventilkörper nur dann mit einer Kraft beaufschlagt, wenn dieser im Abstand zum Ventilsitz angeordnet ist.

Beim erfindungsgemäßen Staubsauger wird die Saugluft mittels der vorhandenem Filter gefiltert, wobei während des normalen Saugbetriebes sämtliche Filter gleichzeitig zum Einsatz kommen. Es kann sich dabei um ein einziges Filter handeln oder auch um mehrere Filter, die gleichzeitig durchströmt werden. Während des normalen Saugbetriebes ist das mindestens eine Schließventil geschlossen, wobei dessen Ventilkörper am Ventilsitz dichtend anliegt und von der Schließfeder mit einer Schließkraft beaufschlagt wird. Das Eindringen von Fremdluft in die Absaugleitung wird somit unterbunden. Zur Abreinigung des mindestens einen Filters öffnet man das Schließventil, wobei zum Ablösen des Ventilkörpers vom Ventilsitz keine allzu große Kraft auf den Ventilkörper ausgeübt werden muss, da der Ventilkörper ausgehend von seiner Schließstellung zunächst nur die Schließkraft der Schließfeder zu überwinden hat. Nimmt der Ventilkörper jedoch eine Stellung im Abstand zum Ventilsitz ein, also eine Lage, in der Fremdluft durch das Schließventil hindurch in die Absaugleitung einströmen und das mindestens eine Filter beaufschlagen kann, so erfährt der Ventilkörper zusätzlich zu der von der Schließfeder ausgeübten Schließkraft eine Rückstoßkraft, die von einem federnden Anschlagelement ausgeübt wird. Durch die Rückstoßkraft wird der Ventilkörper in Richtung auf seine Schließstellung beschleunigt, denn die Rückstoßkraft ist in die gleiche Richtung gerichtet wie die Schließkraft der Schließfeder. Unter der Wirkung der beiden Kräfte nimmt der Ventilkörper innerhalb sehr kurzer Zeit wieder zuverlässig seine Schließstellung ein. Die Zuführung von Fremdluft wirkt somit nur für sehr kurze Zeit, beispielsweise für einen Zeitraum von weniger als 500 Millisekunden, insbesondere für einen Zeitraum von weniger als 200 Millisekunden. Dies hat den Vorteil, dass zwar das mindestens eine Filter kurzzeitig zur Abreinigung auf seiner dem Schmutzsammelbehälter abgewandten Seite mit Fremdluft beaufschlagt werden kann, dass aber innerhalb des Schmutzsammelbehälters kein vollständiger Druckausgleich erfolgt, vielmehr kann während der gesamten Filterabreinigung innerhalb des Schmutzsammelbehälters ein Unterdruck aufrechterhalten werden. Das federnde Anschlagelement, das zusätzlich zur Schließfeder zum Einsatz kommt, stellt sicher, dass das mindestens eine Filter wirkungsvoll innerhalb sehr kurzer Zeit abgereinigt werden kann, ohne dass sich für den Benutzer eine merkliche Unterbrechung des Saugbetriebes einstellt, vielmehr wird der Saugbetrieb quasi kontinuierlich fortgesetzt. Durch das kurzzeitige Öffnen des mindestens einen Schließventiles kann das mindestens eine Filter von der schlagartig eindringenden Fremdluft mit einem Druckstoß beaufschlagt werden, der zu einer Erschütterung und damit zu einer mechanischen Abreinigung des Filters führt, außerdem wird das mindestens eine Filter für kurze Zeit in Gegenstromrichtung von Fremdluft durchströmt. Das Saugaggregat steht auch während der Abreinigung des mindestens einen Filters, also während des Öffnens des Schließventils, mit dem Filter in Strömungsverbindung. Die kurzzeitig in die Absaugleitung einströmende Fremdluft wird somit gleich wieder abgesaugt, so dass sich nach dem Schließen des Schließventiles bereits in Bruchteilen von einer Sekunde im Schmutzsammelbehälter wieder der während des normalen Saugbetriebes herrschende Unterdruck einstellt. Das mindestens eine Filter wird demzufolge in Bruchteilen einer Sekunde ausgehend von der ursprünglichen Saugströmung kurzzeitig von einer Fremdluftströmung und anschließend wieder von der Saugströmung durchströmt. Dies hat eine alternierende mechanische Belastung des mindestens einen Filters zur Folge, wodurch die Filterabreinigung unterstützt wird. Die kurzzeitige Öffnung des Schließventiles erfolgt unter der Wirkung der Rückstoßkraft des federnden Anschlagelementes, das den Ventilkörper nur dann mit einer Kraft beaufschlagt, wenn dieser im Abstand zum Ventilsitz angeordnet ist. Liegt der Ventilkörper am Ventilsitz dichtend an, so übt das federnde Anschlagelement auf den Ventilkörper keine Kraft aus. Das Anschlagelement bildet eine Art Stoßdämpfer für den Ventilkörper, der die Bewegungsenergie des Ventilkörpers aufnimmt und den Ventilkörper in Richtung des Ventilsitzes zurück beschleunigt. Das Gehäuse des Staubsaugers wird dadurch vor Stößen des Ventilkörpers geschützt, d. h. die Gefahr einer Beschädigung des Gehäuses durch den Ventilkörper wird reduziert, und es wird auch die Geräuschentwicklung des Staubsaugers durch schlagende Geräusche des Ventilkörpers vermindert.

Bei einer bevorzugten Ausgestaltung des erfindungsgemäßen Verfahrens rüstet man den Staubsauger nur mit einem einzigen Filter aus, das man zur Abreinigung kurzzeitig mit Fremdluft beaufschlagt.

Der Staubsauger kann mehrere Fremdlufteinlässe aufweisen, die jeweils mittels eines Schließventiles verschließbar sind. Durch gleichzeitiges Öffnen aller Schließventile kann innerhalb kurzer Zeit eine große Menge an Fremdluft dem mindestens einen Filter zugeführt werden. Allerdings erfordert dies eine sorgfältige Abstimmung der Öffnungsbewegungen der zum Einsatz kommenden Ventilkörper der Schließventile. Günstiger ist es, wenn man die gesamte, dem Schmutzsammelbehälter abgewandte Fläche des mindestens einen Filters durch Öffnen von nur einem einzigen Schließventil mit Fremdluft beaufschlagt.

Vorzugsweise wird das mindestens eine Schließventil elektronisch betätigt. So kann beispielsweise ein Elektromagnet zum Einsatz kommen, mit dessen Hilfe ein beweglicher Ventilkörper in einer Schließstellung am Ventilsitz gehalten werden kann, indem der Elektromagnet mit Strom beaufschlagt wird. Um das Schließventil zu öffnen, wird die Stromversorgung des Elektromagneten unterbrochen. Hierbei ist es von Vorteil, wenn man den Ventilkörper mit einem magnetisierbaren Element ausrüstet, das in der Schließstellung des Ventilkörpers stirnseitig am Elektromagnet anliegt und mit dem Elektromagneten einen geschlossenen Magnetkreis ausbildet. Das magnetisierbare Element, beispielsweise eine eisenhaltige Platte, bündelt die Feldlinien des Elektromagneten im Ventilkörper, so dass dieser unter der Wirkung der Magnetkraft zuverlässig in seiner Schließstellung gehalten wird. Nimmt der Ventilkörper jedoch einen Abstand zum Ventilsitz ein, so ist der magnetische Kreis unterbrochen, da auch das magnetisierbare Element einen Abstand zum Elektromagneten einnimmt. Dies hat zur Folge, das die vom Elektromagneten ausgeübte Magnetkraft nur sehr kurzreichweitig ist. Bei einer Öffnungsbewegung erfährt der Ventilkörper somit nur im unmittelbaren Bereich des Ventilsitzes eine Magnetkraft, bereits in einem Abstand von etwa 2 mm zwischen dem Elektromagneten und dem magnetisierbaren Element ist die Magnetkraft so gering, dass sie den Ventilkörper nicht in seine Schließstellung zurückführen kann. Der Ventilkörper führt vielmehr bei einer Unterbrechung der Stromversorgung des Elektromagneten trotz der Schließkraft der Schließfeder solange seine dem Ventilsitz abgewandte Bewegung aus, bis er vom federnden Anschlagelement mit einer Rückstoßkraft in Richtung auf den Ventilsitz beaufschlagt wird.

Günstig ist es, wenn man das mindestens eine Schließventil zeitgesteuert betätigt. Es kann beispielsweise vorgesehen sein, dass man das Schließventil periodisch, vorzugsweise in zeitlichen Abständen von weniger als einer Minute, insbesondere in zeitlichen Abständen von 10 bis 30 Sekunden betätigt, wobei das Schließventil für weniger als eine Sekunde geöffnet wird, insbesondere für weniger als 0,5 Sekunden.

Die Betätigung des mindestens einen Schließventils kann in unterschiedlichen zeitlichen Abständen erfolgen. Beispielsweise kann man das Schließventil zunächst für 10 bis 30 Sekunden geschlossen halten, um es dann in mehreren kürzeren zeitlichen Abständen, beispielsweise in Abständen von etwa 1/10 Sekunde, kurz zu öffnen.

Wie eingangs erwähnt, betrifft die Erfindung auch einen Staubsauger zur Durchführung des voranstehenden Verfahrens. Der Staubsauger umfasst einen Schmutzsammelbehälter, der einen Saugeinlass aufweist und über mindestens ein Filter und zumindest eine Absaugleitung mit mindestens einem Saugaggregat in Strömungsverbindung steht. Außerdem umfasst der Staubsauger mindestens einen stromabwärts des mindestens einen Filters in die Absaugleitung einmündenden Fremdlufteinlass, der mittels zumindest einem Schließventil verschließbar ist, wobei das mindestens eine Schließventil einen zwischen einer Schließstellung und einer Offenstellung hin- und herbewegbaren von einer Schließfeder mit einer Schließkraft beaufschlagten Ventilkörper aufweist, der in der Schließstellung an einem Ventilsitz anliegt und in der Offenstellung zum Ventilsitz beabstandet ist.

Um einen solchen Staubsauger derart weiterzubilden, dass während des Saugbetriebes sämtliche Filter von Fremdluft durchströmt werden können, der Saugbetrieb zur Filterabreinigung aber nicht merklich unterbrochen werden muss, wird erfindungsgemäß vorgeschlagen, dass dem Ventilkörper ein federndes Anschlagelement zugeordnet ist, das den Ventilkörper in der Offenstellung mit einer Rückstoßkraft in Richtung auf den Ventilsitz beaufschlagt, wobei das Anschlagelement den Ventilkörper nur dann mit einer Kraft beaufschlagt, wenn dieser im Abstand zum Ventilsitz angeordnet ist.

Wie bereits erläutert, kann durch das federnde Anschlagelement zuverlässig eine kurze Öffnungsbewegung des Ventilkörpers erzielt werden, wobei er ausgehend von seiner Schließstellung zunächst nur mit der Schließkraft der Schließfeder beaufschlagt wird. Erst wenn der Ventilkörper einen gewissen Abstand zum Ventilsitz einnimmt, kommt das federnde Anschlagelement zur Wirkung, das den Ventilkörper mit einer Rückstoßkraft beaufschlagt. Das federnde Anschlagelement nimmt somit die Bewegungsenergie des Ventilkörpers auf und beschleunigt ihn zurück in Richtung Ventilsitz. Die kurzzeitige Öffnungsbewegung des Ventilkörpers ermöglicht eine kurzzeitige Beaufschlagung des Filters mit Fremdluft, so dass dieses einen Druckstoß erfährt und abgereinigt werden kann. Außerdem kann Fremdluft das Filter in Gegenstromrichtung durchströmen, wodurch die Abreinigungswirkung verstärkt wird. Die Beaufschlagung mit Fremdluft erfolgt nur über einen sehr kurzen Zeitraum, insbesondere über einen Zeitraum von weniger als einer Sekunde, vorzugsweise für weniger als 0,5 Sekunden. Der Saugbetrieb des Staubsaugers kann quasi kontinuierlich fortgesetzt werden, und dennoch kann eine wirkungsvolle Filterabreinigung erzielt werden. Fremdluft tritt nur für einen sehr kurzen Zeitraum in den Schmutzsammelbehälter ein, so dass die Saugströmung im Bereich des Saugeinlasses des Schmutzsammelbehälters nicht merklich unterbrochen wird. Der Staubsauger zeichnet sich folglich durch einen konstruktiv einfachen Aufbau aus, wobei sämtliche vorhandenen Filter im Saugbetrieb gleichzeitig von Saugluft durchströmt werden können und wobei durch kurzzeitiges Öffnen des mindestens einen Schließventils die gesamte, dem Schmutzsammelbehälter abgewandte Seite des mindestens einen Filters mit Fremdluft beaufschlagt werden kann. Die Fremdluft wird dem Filter schlagartig zugeführt, wobei das mindestens eine Saugaggregat permanent mit dem Filter in Strömungsverbindung steht, also auch während der Zeit seiner Abreinigung.

Vorzugsweise ist die Schließfeder zwischen dem Ventilkörper und einer Filterhalterung eingespannt, wobei an der Filterhalterung das mindestens eine Filter gehalten ist. Die Schließfeder ist somit als Druckfeder ausgestaltet, die den Ventilkörper permanent mit einer Schließkraft beaufschlagt. Die Schließfeder steht sowohl in der Schließstellung als auch in der Offenstellung des Ventilkörpers unter Vorspannung, wobei sie sich an der Filterhalterung abstützt. Die Filterhalterung hat somit zum einen die Funktion, eine Halterung für das mindestens eine Filter auszubilden, und zum anderen stellt die Filterhalterung ein Widerlager für die Schließfeder dar. Die Schließfeder liegt hierbei an der dem Filter abgewandten Seite der Filterhalterung an. Hierbei ist es von Vorteil, wenn die Filterhalterung einen in Richtung des Schließventils vorstehenden Kragen aufweist, der einen Endbereich der Schließfeder in Umfangsrichtung umgibt. Alternativ kann vorgesehen sein, dass die Filterhalterung eine Aufnahme aufweist, in die die Schließfeder eintaucht.

Von besonderem Vorteil ist es, wenn auch das federnde Anschlagelement an der Filterhalterung angeordnet ist. Hierzu kann die Filterhalterung einen in Richtung der Schließfeder vorstehenden Kragen aufweisen, der einen Endbereich des federnden Anschlagelementes in Umfangsrichtung umgibt. Alternativ kann vorgesehen sein, dass die Filterhalterung eine Ausnehmung aufweist, in die das federnde Anschlagelement mit einem Endabschnitt eintaucht.

Das federnde Anschlagelement kann in unterschiedlicher Form ausgestaltet sein. Von Vorteil ist es, wenn es als Anschlagfeder ausgebildet ist.

Vorzugsweise weist die Anschlagfeder eine größere Federkonstante auf als die Schließfeder. Die Anschlagfeder ist somit härter als die Schließfeder, d. h. es ist eine höhere Kraft erforderlich, um die Anschlagfeder zusammenzudrücken als dies bei der Schließfeder der Fall ist. Die Anschlagfeder kann ebenso wie die Schließfeder eine lineare oder auch eine nicht-lineare Kennlinie aufweisen. Beispielsweise kann vorgesehen sein, dass die Anschlagfeder und/oder die Schließfeder mit zunehmendem Federweg härter werden.

Bei einer bevorzugten Ausgestaltung des erfindungsgemäßen Staubsaugers sind die Schließfeder und die Anschlagfelder als Schraubenfedern mit unterschiedlichen Durchmessern ausgestaltet, wobei eine der beiden Schraubenfedern die andere Schraubenfeder in Umfangsrichtung umgibt. Dies ermöglicht eine platzsparende Anordnung der Schließfeder und der Anschlagfeder und ermöglicht darüber hinaus eine einfache Montage.

Vorzugsweise umgibt die Schließfeder die Anschlagfeder in Umfangsrichtung. Dies hat den Vorteil, dass der Ventilkörper in der Schließstellung von einer verhältnismäßig großen Schließfeder in seiner Schließstellung gehalten wird. Die Stabilität des Ventilkörpers wird dadurch verbessert.

Wie bereits erläutert, ist die Schließfeder vorzugsweise als Schraubenfeder ausgebildet. Hierbei ist es günstig wenn der Durchmesser der Schließfeder mindestens 1/3 des Durchmessers des Ventilkörpers beträgt, da dadurch die Gefahr eine Kippbewegung des Ventilkörpers vermindert werden kann.

Besonders günstig ist es, wenn der Durchmesser der Schließfeder mindestens halb so groß ist wie der Durchmesser des Ventilkörpers.

Das Verhältnis der Durchmesser der beiden Schraubenfedern beträgt bei einer bevorzugten Ausführungsform ungefähr 1:3. Es hat sich gezeigt, dass durch eine derartige Dimensionierung der Schraubenfedern die Funktionsfähigkeit des Schließventils verbessert werden kann.

Wie bereits dargelegt, ist das federnde Anschlagelement vorzugsweise als Schraubenfeder ausgebildet. Hierbei ist es günstig, wenn der Ventilkörper einen Führungszapfen aufweist, der in die Schraubenfeder eintaucht. Dadurch wird die Gefahr vermindert, dass der Ventilkörper bei seiner Öffnungsbewegung verkantet.

Der Ventilkörper kann verschwenkbar an dem mindestens einen Ventilsitz oder an einem gerätefesten Teil gelagert sein. Von besonderem Vorteil ist es jedoch, wenn der Ventilkörper verschiebbar gehalten ist. Insbesondere kann vorgesehen sein, dass das Schließventil Führungselemente aufweist zur Führung des Ventilkörpers.

Die Führungselemente sind vorzugsweise zylinderförmig ausgestaltet. Dies gibt die Möglichkeit, den Ventilkörper um die Zylinderachse der Führungselemente zu verdrehen, ohne dass dadurch die Öffnungs- und Schließbewegung des Ventilkörpers beeinträchtigt wird. Durch die Bereitstellung zylinderförmiger Führungselemente wird folglich die Gefahr vermindert, dass der Ventilkörper verkantet.

Es kann vorgesehen sein, dass die Führungselemente eine Führungshülse und eine Führungsaufnahme umfassen, wobei die Führungshülse in die Führungsaufnahme eintaucht. Sowohl in der Schließstellung als auch in der Offenstellung des Ventilkörpers taucht die Führungshülse in die Führungsaufnahme ein. Dadurch wird eine gleichbleibende Ausrichtung des Ventilkörpers relativ zum Ventilsitz gewährleistet. Die Führungshülse kann am Ventilkörper und die zugeordnete Führungsaufnahme kann an einer Ventilhalterung angeordnet sein, die den Ventilsitz ausbildet. Es ist jedoch auch eine umgekehrte Ausgestaltung denkbar dergestalt, dass die Führungshülse an der Ventilhalterung und die Führungsaufnahme am Ventilkörper positioniert ist.

Bei einer besonders bevorzugten Ausgestaltung des erfindungsgemäßen Staubsaugers weist das Schließventil eine Magnethalterung auf, die den Ventilkörper in der Schließstellung mit einer magnetischen Haltekraft beaufschlagt. Der Ventilkörper erfährt somit in seiner Schließstellung zum einen eine Belastung durch die Schließfeder und zum anderen eine Belastung durch die Magnethalterung. Somit ist zuverlässig sichergestellt, dass der Ventilkörper in der Schließstellung dicht am Ventilsitz anliegt und die Strömungsverbindung zwischen dem Fremdlufteinlass und der Absaugleitung zuverlässig unterbricht.

Als Magnethalterung kann beispielsweise ein Permanentmagnet zum Einsatz kommen. Von Vorteil ist es jedoch, wenn die Magnethalterung einen steuerbaren Elektromagneten aufweist, denn dies ermöglicht eine einfache zeitabhängige Steuerung des Schließventiles, indem der Elektromagnet in geschlossenem Zustand des Schließventiles mit Strom beaufschlagt und zum Öffnen des Schließventiles die Stromversorgung des Elektromagneten unterbrochen wird.

Besonders vorteilhaft ist es, wenn der Elektromagnet an einer Ventilhalterung des Schließventiles angeordnet ist, die den Ventilsitz ausbildet, und wenn der Ventilkörper ein dem Elektromagneten zugeordnetes magnetisierbares Element aufweist, das in der Schließstellung des Ventilkörpers mit dem Elektromagneten einen geschlossenen Magnetkreis ausbildet. In der geschlossenen Stellung des Ventilkörpers bündelt das magnetisierbare Element die magnetischen Feldlinien des Elektromagneten. Nimmt der Ventilkörper jedoch einen Abstand zum Ventilsitz ein, so ist der magnetische Kreis zwischen dem Elektromagneten und dem magnetisierbaren Element unterbrochen. Das magnetisierbare Element kann beispielsweise plattenförmig ausgebildet und aus einem eisenhaltigen Material hergestellt sein. In der Schließstellung des Ventilkörpers kann es stirnseitig am Elektromagneten anliegen.

Der kombinierte Einsatz des Elektromagneten, der Schließfeder und des federnden Anschlagelementes hat den Vorteil, dass der Ventilkörper in der Schließstellung mit Hilfe des strombeaufschlagten Elektromagneten dicht an den Ventilsitz angelegt werden kann. Soll das Schließventil geöffnet werden, so wird hierzu die Stromversorgung des Elektromagneten unterbrochen. Bei geschlossenem Schließventil wird der Ventilkörper auf seiner dem Fremdlufteinlass zugewandten Seite mit dem Druck der Fremdluft beaufschlagt, wohingegen auf seiner dem Fremdlufteinlass abgewandten Seite Unterdruck vorliegt. Wird die Stromversorgung des Elektromagneten unterbrochen, so führt die am Ventilkörper anliegende Druckdifferenz dazu, dass sich dieser entgegen der Wirkung der Schließfeder vom Ventilsitz abhebt, so dass das Schließventil geöffnet wird. Im Abstand zum Ventilsitz trifft der Ventilkörper auf das federnde Anschlagelement, das den Ventilkörper mit einer Rückstoßkraft in Richtung auf den Ventilsitz beaufschlagt. Unter der Wirkung der Rückstoßkraft und der von der Schließfeder ausgeübten Schließkraft erreicht der Ventilkörper wieder den Ventilsitz. Die Schließfeder hat hierbei die Funktion, den Ventilkörper in den Bereich des Magnetfeldes des Elektromagneten zurückzuführen, so dass der Ventilkörper von dem erneut mit Strom beaufschlagten Elektromagneten wieder am Ventilsitz gehalten werden kann.

Der Staubsauger kann mehrere Filter aufweisen, als besonders vorteilhaft hat es sich jedoch erwiesen, wenn der Staubsauger ein einziges Filter umfasst. Insbesondere kann vorgesehen sein, dass das Filter durch gleichzeitiges Öffnen aller Schließventile über seine gesamte Fläche mit Fremdluft beaufschlagbar ist. Bei einer konstruktiv besonders einfachen Ausgestaltung des erfindungsgemäßen Staubsaugers weist dieser lediglich ein einziges Schließventil auf, das auf der dem einzigen Filter abgewandten Seite einer Strömungsdurchlässe abweisenden Filterhalterung positioniert ist. Durch Öffnen des Schließventiles wird das einzige Filter über seine gesamte Fläche mit Fremdluft beaufschlagt.

Die erfindungsgemäße Ausgestaltung des Staubsaugers ermöglicht es, die dem Schmutzsammelbehälter abgewandte Seite des mindestens einen Filters kurzzeitig mit Fremdluft zu beaufschlagen und diese innerhalb kurzer Zeit mittels des Saugaggregates abzusaugen, das auch bei geöffnetem Schließventil mit dem Filter in Strömungsverbindung steht. Günstig ist es hierbei, wenn der Ventilkörper während der Abreinigung des Filters eine kontinuierliche Bewegung ausgehend von seiner Schließstellung über seine Offenstellung zurück in seine Schließstellung ausführt. Bei einer derartigen Ausgestaltung wird der Ventilkörper beim Öffnen des Schließventils zunächst stark in die dem Ventilsitz abgewandte Richtung beschleunigt und anschießend mit Hilfe des federnden Anschlagelementes stark abgebremst und in seiner Bewegungsrichtung umgekehrt, um dann wieder in Richtung auf den Ventilsitz beschleunigt zu werden.

Die gesamte Bewegung des Ventilkörpers ausgehend von seiner Schließstellung über die Offenstellung zurück in die Schließstellung kann in Bruchteilen einer Sekunde erfolgen.

Bei einer bevorzugten Ausführungsform ist das mindestens eine Filter mittels des Schließventils für weniger als 200 Millisekunden, insbesondere für weniger als 100 Millisekunden, mit Fremdluft beaufschlagbar. Eine derartige Beaufschlagung führt für den Benutzer zu keiner merklichen Unterbrechung des Saugbetriebes, sie hat aber eine wirkungsvolle Abreinigung des Filters zur Folge.

Bevorzugt ist das mindestens eine Filters mittels des zumindest einen Schließventils unter Aufrechterhaltung eines Unterdrucks im Mündungsbereich eines in den Saugeinlass einmündenden Saugschlauches mit Fremdluft beaufschlagbar. Wird das mindestens eine Schließventil geöffnet, so steigt der Druck auf der dem Schmutzsammelbehälter abgewandten Seite des Filters schlagartig an und wird dann wieder abgebaut. Der schlagartige Druckanstieg bewirkt eine wirkungsvolle Abreinigung des Filters, da der Druckanstieg jedoch von dem mindestens einen Saugaggregat gleich wieder abgebaut wird, führt er nicht zu einer vollständigen Unterbrechung des Unterdrucks im Mündungsbereich des in den Saugeinlass einmündenden Saugschlauches. Es kann vielmehr ein quasi kontinuierlicher Saugbetrieb aufrechterhalten werden.

Die nachfolgende Beschreibung einer bevorzugten Ausführungsform der Erfindung dient im Zusammenhang mit der Zeichnung der näheren Erläuterung. Es zeigen:
- Figur 1:: eine schematische Schnittansicht eines erfindungsgemäßen Staubsaugers und
- Figur 2:: eine vergrößerte Darstellung von Detail A aus Figur 1.

In der Zeichnung ist schematisch ein Staubsauger 10 dargestellt mit einem Unterteil, das einen Schmutzsammelbehälter 12 ausbildet, auf den ein Oberteil 14 aufgesetzt ist, das ein Saugaggregat 16 aufnimmt. Der Schmutzsammelbehälter 12 umfasst einen Saugeinlass 18, an den ein Saugschlauch 20 anschließbar ist. An dem in der Zeichnung zur Erzielung einer besseren Übersicht nicht dargestellten freien Ende des Saugschlauches 20 kann eine Saugdüse angeschlossen werden. Alternativ kann vorgesehen sein, dass der Saugschlauch 20 an ein Bearbeitungswerkzeug, beispielsweise ein Bohraggregat oder ein Fräsaggregat, angeschlossen wird, so dass während des Betriebes des Bearbeitungswerkzeuges anfallender Staub abgesaugt werden kann.

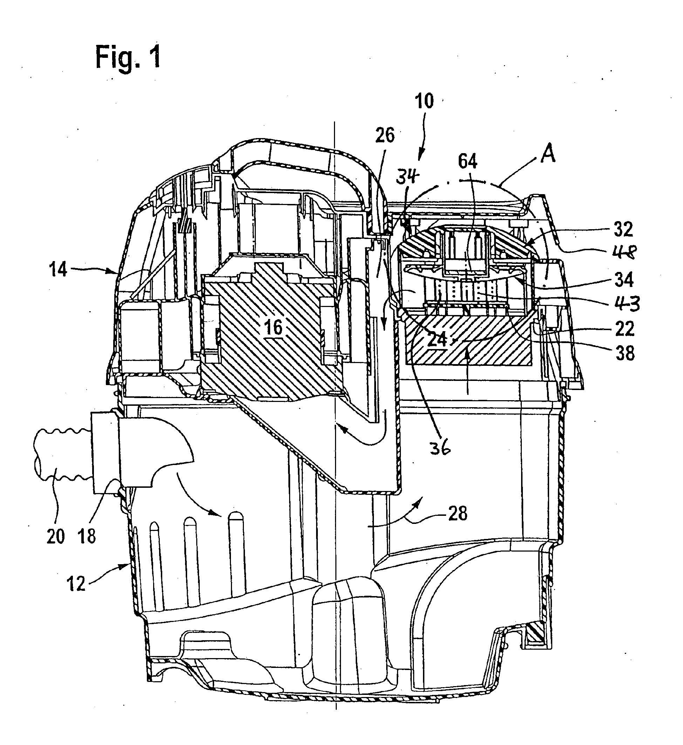

Das Oberteil 14 bildet einen Saugauslass 22 für den Schmutzsammelbehälter 12 aus. Am Saugauslass 22 ist ein Faltenfilter 24 gehalten, an das sich eine Absaugleitung in Form eines Saugkanales 26 anschließt. Über den Saugkanal 28 steht das Faltenfilter 24 mit dem Saügaggregat 16 in Strömungsverbindung. Der Schmutzsammelbehälter 12 kann über den Saugkanal 26 und das Faltenfilter 24 vom Saugaggregat 16 mit Unterdruck beaufschlagt werden, so dass sich eine in Figur 1 durch die Pfeile 28 symbolisierte Saugströmung ausbildet, unter deren Wirkung Schmutz in den Schmutzsammelbehälter 12 eingesaugt werden kann. Mittels des Faltenfilters 24 können die Schmutzteilchen aus der Saugströmung 28 abgeschieden werden.

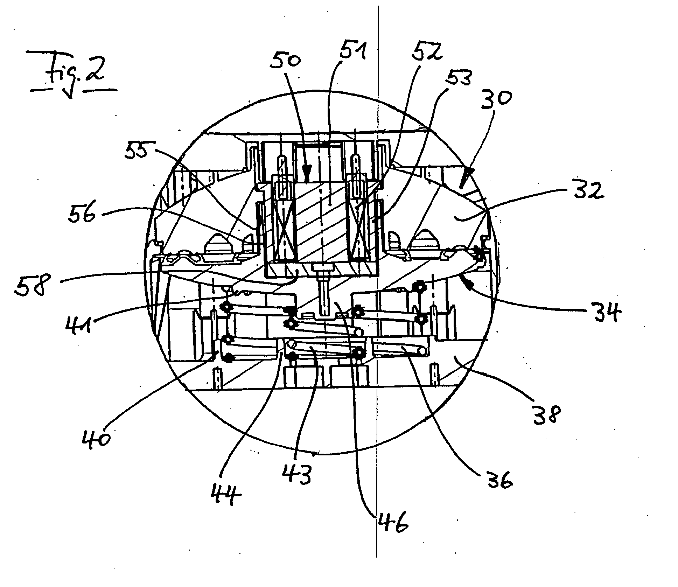

Oberhalb des Faltenfilters 24 ist im Oberteil 14 ein Schließventil 30 angeordnet, das in Figur 2 vergrößert dargestellt ist. Es umfasst eine ortsfest im Oberteil 14 angeordnete Ventilhalterung 32, die einen Ventilsitz ausbildet und mit einem Ventilkörper in Form eines kreisrunden Ventiltellers 34 zusammenwirkt. Der Ventilteller 34 ist mittels einer Schließfeder 36 mit einer Schließkraft in Richtung auf die Ventilhalterung 32 beaufschlagt. Die Schließfeder 36 weist eine lineare Kennlinie auf und ist zwischen einer plattenartigen, eine Vielzahl von Strömungsdurchlässen aufweisenden, ortsfest im Oberteil 14 angeordneten Filterhalterung 38 und dem Ventilteller 34 eingespannt. Die Filterhalterung 38 weist auf ihrer dem Schließventil 30 zugewandten Oberseite einen äußeren Ringkragen 40 auf, der den benachbarten Endbereich der als Schraubenfeder ausgebildeten Schließfeder 36 in Umfangsrichtung umgibt. Der Ventilteller 34 umfasst auf seiner der Filterhalterung 38 zugewandten Unterseite einen Ringwulst 41, an dem die Schließfeder 36 außenseitig anliegt.

Zusätzlich zur Schließfeder 36 trägt die Filterhalterung 38 ein federndes Anschlagelement in Form einer Anschlagfeder 43, die ebenso wie die Schließfeder 36 eine lineare Kennlinie aufweist und als Schraubenfeder ausgebildet ist. Zur Halterung der Anschlagfeder 43 weist die Filterhalterung 38 auf ihrer dem Schließventil 30 zugewandten Oberseite einen konzentrisch zum äußeren Ringkragen 40 angeordneten inneren Ringkragen 44 auf, in den die Anschlagfeder 43 eintaucht. Fluchtend zum inneren Ringkragen 44 ist an den Ventilteller 34 unterseitig ein Führungszapfen 46 angeformt, der in der in Figur 2 dargestellten Schließstellung des Ventiltellers 34 von einem Endbereich der Anschlagfeder 43 umgeben ist. Die Anschlagfeder 43 steht im Gegensatz zur Schließfeder 36 in der Schließstellung Ventiltellers 34 nicht unter Vorspannung. Erst wenn sich der Ventilteller 34 vom Ventilsitz der Ventilhalterung 32 abhebt, gelangt die Anschlagfeder 43 an der Unterseite des Ventiltellers 34 zur Anlage und wird bei der weiteren Bewegung des Ventiltellers 34 etwas zusammengedrückt. Darauf wird nachfolgend noch näher eingegangen.

Die Ventilhalterung 32 weist eine Vielzahl von in der Zeichnung nicht dargestellten Durchgangsöffnungen auf, deren Mündungsbereiche im geschlossenen Zustand des Schließventiles 30 vom Ventilteller 34 verschlossen werden. In Höhe der Ventilhalterung 32 weist das Oberteil 14 eine seitliche Öffnung 48 auf. Über die seitliche Öffnung 48 kann Fremdluft in die Durchgangsöffnungen der Ventilhalterung 32 einströmen. Nimmt der Ventilteller 34 eine zur Ventilhalterung 32 beabstandete Stellung ein, so steht somit die seitliche Öffnung 48 über die Durchgangsöffnungen der Ventilhalterung 32 mit dem Saugkanal 26 in Strömungsverbindung und Fremdluft kann die dem Schmutzsammelbehälter 12 abgewandte Seite des Filters 24 beaufschlagen. In der geschlossenen Stellung des Ventiltellers 34 ist die Strömungsverbindung zwischen dem Saugkanal 26 und der seitlichen Öffnung 48 unterbrochen.

In einem zentralen Bereich trägt die Ventilhalterung 32 einen Elektromagneten 50 mit einem Magnetkern 51, der von einer Magnetspule 52 umgeben ist. Den außenseitigen Abschluss des Elektromagneten 50 bildet ein zylinderförmiger Mantel 53, der ebenso wie der Magnetkern 51 aus einem magnetisierbaren Material gefertigt ist. Der Mantel 53 ist in Umfangsrichtung von einer Führungsaufnahme in Form eines Ringraumes 55 umgeben, in den eine oberseitig an den Ventilteller 34 angeformte Führungshülse 56 eintaucht. Die Führungshülse 56 nimmt ein magnetisierbares Element in Form einer Eisenplatte 58 auf, die in der Schließstellung des Ventiltellers 34 an der freien Stirnseite des Elektromagneten 50 anliegt und in Kombination mit dem Magnetkern 51 und dem Mantel 53 einen geschlossenen Magnetkreis ausbildet. Dieser geschlossene Magnetkreis bündelt die Magnetfeldlinien des Elektromagneten 50.

Ist das Schließventil 30 geschlossen, so bildet sich im Schmutzsammelbehälter 12 sowie im Saugkanal 26 ein Unterdruck aus. Schmutzpartikel können somit ebenso wie Flüssigkeitsströpfchen in den Schmutzsammelbehälter 12 eingesaugt werden. Der Elektromagnet 50 steht über Stromversorgungsleitungen, die in der Zeichnung zur Erzielung einer besseren Übersicht nicht dargestellt sind, mit einer in der Zeichnung ebenfalls nicht dargestellten elektrischen Steuereinheit des Staubsaugers 10 in Verbindung. Von der elektrischen Steuereinheit wird der Elektromagnet 10 während des normalen Saugbetriebes des Staubsaugers 10 mit Strom beaufschlagt, und aufgrund des sich ausbildenden Magnetfeldes wird der Ventilteller 34 zuverlässig in seiner Schließstellung gehalten. Die Haltekraft des Elektromagneten 50 wird von der Federkraft der Schließfeder 36 unterstützt.

Während des normalen Saugbetriebes werden Schmutzpartikel am Filter 24 abgeschieden, so dass sich dieses allmählich zusetzt. In zeitlichen Abständen von beispielsweise 10 bis 30 Sekunden, insbesondere in zeitlichen Abständen von etwa 15 Sekunden, wird deshalb die Stromversorgung des Elektromagneten 50 kurzzeitig unterbrochen. Dies hat zur Folge, dass das Magnetfeld des Elektromagneten innerhalb sehr kurzer Zeit zusammenbricht und damit die magnetische Haltekraft für den Ventilteller 34 entfällt. Dies wiederum bewirkt, dass der Ventilteller 34 aufgrund der auf ihn einwirkenden Druckdifferenz, die sich aus dem Außendruck der im Bereich der Ventilhalterung 32 vorliegenden Fremdluft und dem Innendruck innerhalb des Saugkanales 26 ergibt, entgegen der Wirkung der Schließfeder 36 vom Ventilsitz abhebt. Fremdluft kann dann schlagartig durch die Durchgangsöffnungen der Ventilhalterung 32 hindurch in den Saugkanal 26 einströmen. Das Filter 24 wird somit schlagartig auf seiner dem Schmutzsammelbehälter 12 abgewandten Seite mit Fremdluft beaufschlagt. Dies führt zu einer mechanischen Erschütterung des Filters 24. Außerdem wird das Filter 24 in Gegenstromrichtung von der Fremdluft durchströmt. Dies hat insgesamt eine wirkungsvolle Abreinigung des Filters 24 zur Folge.

Der sich vom Ventilsitz abhebende Ventilteller 34 gelangt nach einer kurzen Hubbewegung mit seiner Unterseite an die Anschlagfeder 43, die den Ventilteller 34 mit einer Rückstoßkraft in Richtung auf die Ventilhalterung 32 beaufschlagt. Die Anschlagfeder 43 nimmt hierbei die Bewegungsenergie des Ventiltellers 34 auf. Letzterer wird von der Anschlagfeder 43 in Richtung auf den Ventilsitz beschleunigt. Nähert sich der Ventilteller 34 dem Ventilsitz, so gibt die Anschlagfeder 43 den Ventilteller 34 frei. Letzterer wird von der Schließfeder 36 bis zum Ventilsitz zurückgeführt, so dass die Eisenplatte 58 wieder an der freien Stirnseite des Elektromagneten 50 zur Anlage gelangt. Spätestens zu diesem Zeitpunkt wird der Elektromagnet 50 von der zugeordneten Steuereinheit erneut mit Strom beaufschlagt, so dass der Ventilteller 34 vom Elektromagneten 50 wieder dichtend am Ventilsitz gehalten wird. Die Unterbrechung der Stromzufuhr für den Elektromagneten 50 erfolgt lediglich über einen Zeitraum von maximal 100 Millisekunden, so dass das Schließventil 30 nur für einen sehr kurzen Zeitraum öffnet und Fremdluft zum Filter 24 gelangen kann. Anschließend wird das Elektromagnet 50 wieder mit Strom beaufschlagt, und zwar für einen Zeitraum von etwa 10 bis ca. 30 Sekunden, insbesondere für einen Zeitraum von etwa 15 Sekunden. Somit erfolgt alle 15 Sekunden eine kurzzeitige Filterabreinigung. Aufgrund der kurzen Öffnung des Schließventils 30 wird auch während der Filterabreinigung im Mündungsbereich des in den Saugeinlass 10 einmündenden Saugschlauches ein Unterdruck aufrechterhalten. Dies hat zur Folge, dass für den Benutzer ein quasi kontinuierlicher Saugbetrieb möglich ist und dennoch eine zuverlässige Filterabreinigung gewährleistet ist.

## Patentansprüche

1. Verfahren zum Abreinigen der Filter eines Staubsaugers (10), mit einem Schmutzsammelbehälter (12), der einen Saugeinlass (18) aufweist und über mindestens ein Filter (24) und zumindest eine Absaugleitung (26) mit mindestens einem Saugaggregat (16) in Strömungsverbindung steht, und mit mindestens einem stromabwärts des mindestens einen Filters (24) in die Absaugleitung (26) einmündenden Fremdlufteinlass (48), der mittels zumindest einem Schließventil (30) verschließbar ist, wobei das mindestens eine Schließventil (30) einen zwischen einer Schließstellung und einer Offenstellung hin- und herbewegbaren, von einer Schließfeder (36) mit einer Schließkraft beaufschlagten Ventilkörper (34) aufweist, der in der Schließstellung an einem Ventilsitz anliegt und in der Offenstellung zum Ventilsitz beabstandet ist, wobei man zur Abreinigung des mindestens einen Filters (24) zumindest ein Schließventil (30) öffnet und die dem Schmutzsammelbehälter (12) abgewandte Seite des mindestens einen Filters (24) mit Fremdluft beaufschlagt, **dadurch gekennzeichnet, dass** man den Ventilkörper (34) unabhängig von seiner Stellung mit der Schließkraft der Schließfeder (36) und in einer zum Ventilsitz beabstandeten Stellung zusätzlich mit einer Rückstoßkraft eines federnden Anschlagelements (43) beaufschlagt, das den Ventilkörper (34) nur dann mit einer Kraft beaufschlagt, wenn dieser im Abstand zum Ventilsitz angeordnet ist.

2. Verfahren nach Anspruch 1, **dadurch gekennzeichnet, dass** man den Staubsauger (10) mit einem einzigen Filter (24) ausrüstet.

3. Verfahren nach Anspruch 1 oder 2, **dadurch gekennzeichnet, dass** man die gesamte, dem Schmutzsammelbehälter (12) abgewandte Fläche des mindestens einen Filters (24) durch Öffnen von einem einzigen Schließventil (30) mit Fremdluft beaufschlagt.

4. Verfahren nach Anspruch 1, 2 oder 3, **dadurch gekennzeichnet, dass** man das mindestens eine Schließventil (30) elektronisch betätigt.

5. Verfahren nach einem der voranstehenden Ansprüche, **dadurch gekennzeichnet, dass** man das mindestens eine Schließventil (30) zeitgesteuert betätigt.

6. Verfahren nach Anspruch 5, **dadurch gekennzeichnet, dass** man das mindestens eine Schließventil (30) in zeitlichen Abständen von weniger als 30 Sekunden periodisch betätigt.

7. Staubsauger zur Durchführung des Verfahrens nach einem der voranstehenden Ansprüche, mit einem Schmutzsammelbehälter (12), der einen Saugeinlass (18) aufweist und über mindestens ein Filter (24) und zumindest eine Absaugleitung (26) mit mindestens einem Saugaggregat (16) in Strömungsverbindung steht, und mit mindestens einem stromabwärts des mindestens einen Filters (24) in die Absaugleitung (26) einmündenden Fremdlufteinlass (48), der mittels zumindest einem Schließventil (30) verschließbar ist, wobei das mindestens eine Schließventil (30) einen zwischen einer Schließstellung und einer Offenstellung hin- und herbewegbaren, von einer Schließfeder (36) mit einer Schließkraft beaufschlagten Ventilkörper (34) aufweist, der in der Schließstellung an einem Ventilsitz anliegt und in der Offenstellung zum Ventilsitz beabstandet ist, **dadurch gekennzeichnet, dass** dem Ventilkörper (34) ein federndes Anschlagelement (43) zugeordnet ist, das den Ventilkörper (34) in der Offenstellung mit einer Rückstoßkraft in Richtung auf den Ventilsitz beaufschlagt, wobei das Anschlagelement (43) den Ventilkörper (34) nur dann mit einer Kraft beaufschlagt, wenn dieser im Abstand zum Ventilsitz angeordnet ist.

8. Staubsauger nach Anspruch 7, **dadurch gekennzeichnet, dass** die Schließfeder (36) zwischen dem Ventilkörper (34) und einer Filterhalterung (38) eingespannt ist, wobei an der Fitterhalterung (38) das mindestens eine Filter (24) gehalten ist.

9. Staubsauger nach Anspruch 8, **dadurch gekennzeichnet, dass** das federnde Anschlagelement (43) an der Filterhalterung (38) angeordnet ist.

10. Staubsauger nach Anspruch 7, 8 oder 9, **dadurch gekennzeichnet, dass** das federnde Anschlagelement als Anschlagfeder (43) ausgestaltet ist.

11. Staubsauger nach Anspruch 10, **dadurch gekennzeichnet, dass** die Anschlagfeder (43) eine größere Federkonstante aufweist als die Schließfeder (36).

12. Staubsauger nach Anspruch 10 oder 11, **dadurch gekennzeichnet, dass** die Schließfeder (36) und die Anschlagfeder (43) als Schraubenfedern mit unterschiedlichen Durchmessern ausgestaltet sind, wobei eine der beiden Schraubenfedern die andere Schraubenfeder in Umfangsrichtung umgibt.

13. Staubsauger nach Anspruch 12, **dadurch gekennzeichnet, dass** die Schließfeder (36) die Anschlagfeder (43) in Umfangsrichtung umgibt.

14. Staubsauger nach einem der Ansprüche 7 bis 13, **dadurch gekennzeichnet, dass** die Schließfeder (36) als Schraubenfeder ausgestaltet ist, deren Durchmesser mindestens 1/3 des Durchmessers des Ventilkörpers (34) beträgt.

15. Staubsauger nach Anspruch 14, **dadurch gekennzeichnet, dass** der Durchmesser der Schließfeder (36) mindestens halb so groß ist wie der Durchmesser des Ventilkörpers (34).

16. Staubsauger nach Anspruch 12 oder 13, **dadurch gekennzeichnet, dass** das Verhältnis der Durchmesser der beiden Schraubenfedern ungefähr 1:3 beträgt.

17. Staubsauger nach einem der Ansprüche 7 bis 16, **dadurch gekennzeichnet, dass** das federnde Anschlagelement (43) als Schraubenfeder ausgestaltet ist und dass der Ventilkörper (34) einen Führungszapfen (46) aufweist, der in die Schraubenfeder eintaucht.

18. Staubsauger nach einem der Ansprüche 7 bis 17, **dadurch gekennzeichnet, dass** das Schließventil (30) Führungselemente (55, 56) aufweist zur Führung des Ventilkörpers (34).

19. Staubsauger nach Anspruch 18, **dadurch gekennzeichnet, dass** die Führungselemente (55, 56) zylinderförmig ausgestaltet sind.

20. Staubsauger nach Anspruch 18 oder 19, **dadurch gekennzeichnet, dass** die Führungselemente eine Führungshülse (56) und eine Führungsaufnahme (55) umfassen, wobei die Führungshülse (56) in die Führungsaufnahme (55) eintaucht.

21. Staubsauger nach einem der Ansprüche 7 bis 20, **dadurch gekennzeichnet, dass** das Schließventil (30) eine Magnethalterung (50) aufweist, die den Ventilkörper (34) in der Schließstellung mit einer magnetischen Haltekraft beaufschlagt.

22. Staubsauger nach Anspruch 21, **dadurch gekennzeichnet, dass** die Magnethalterung einen steuerbaren Elektromagneten (50) aufweist.

23. Staubsauger nach Anspruch 22, **dadurch gekennzeichnet, dass** der Elektromagnet (50) an einer Ventilhalterung (32) angeordnet ist, die den Ventilsitz ausbildet, und dass der Ventilkörper (34) ein dem Elektromagneten (50) zugeordnetes magnetisierbares Element (58) aufweist, das in der Schließstellung des Ventilkörpers (34) mit dem Elektromagneten (50) einen geschlossenen Magnetkreis-ausbildet.

24. Staubsauger nach einem der Ansprüche 7 bis 23, **dadurch gekennzeichnet, dass** der Staubsauger (10) ein einziges Filter (24) aufweist.

25. Staubsauger nach Anspruch 24, **dadurch gekennzeichnet, dass** das Filter (24) durch Öffnen des Schließventils (30) über seine gesamte Fläche mit Fremdluft beaufschlagbar ist.

26. Staubsauger nach einem der Ansprüche 7 bis 25, **dadurch gekennzeichnet, dass** der Ventilkörper (34) ausgehend von seiner Schließstellung über seine Offenstellung kontinuierlich in seine Schließstellung zurückbewegbar ist.

27. Staubsauger nach einem der Ansprüche 7 bis 26, **dadurch gekennzeichnet, dass** das mindestens eine Filter (24) mittels des mindestens einen Schließventils (30) für weniger als 200 Millisekunden mit Fremdluft beaufschlagbar ist.

28. Staubsauger nach einem der Ansprüche 7 bis 27, **dadurch gekennzeichnet, dass** das mindestens eine Filter (24) mittels des mindestens einen Schließventils (30) unter Aufrechterhaltung eines Unterdrucks im Mündungsbereich eines in den Saugeinlass (18) einmündenden Saugschlauches (20) mit Fremdluft beaufschlagbar ist.

## Claims

1. Method for cleaning the filters of a vacuum cleaner (10) comprising a dirt collecting container (12), which has a suction inlet (18) and is in flow connection with at least one suction unit (16) via at least one filter (24) and at least one suction line (26), and comprising at least one external air inlet (48) which opens into the suction line (26) downstream of the at least one filter (24) and can be closed by means of at least one closing valve (30), the at least one closing valve (30) having a valve body (34) which is movable back and forth between a closed position and an open position and is acted upon by a closing spring (36) with a closing force, the valve body lying against a valve seat in the closed position and being at a distance from the valve seat in the open position, wherein, in order to clean the at least one filter (24), at least one closing valve (30) is opened and the side of the at least one filter (24) that is oriented away from the dirt collecting container (12) is acted upon by external air, **characterized in that** the valve body (34) is acted upon, irrespective of its position, by the closing force of the closing spring (36) and, in a position at a distance from the valve seat, additionally acted upon by a repulsion force of a resilient stop element (43), which only acts with a force upon the valve body (34) when the latter is disposed at a distance from the valve seat.

2. Method according to claim 1, **characterized in that** the vacuum cleaner (10) is equipped with a single filter (24).

3. Method according to claim 1 or 2, **characterized in that** the entire surface area of the at least one filter (24) that is oriented away from the dirt collecting container (12) is acted upon by external air by opening a single closing valve (30).

4. Method according to claim 1, 2 or 3, **characterized in that** the at least one closing valve (30) is actuated electronically.

5. Method according to any one of the preceding claims, **characterized in that** the at least one closing valve (30) is actuated in a time-controlled manner.

6. Method according to claim 5, **characterized in that** the at least one closing valve (30) is actuated periodically at time intervals of less than 30 seconds.

7. Vacuum cleaner for carrying out the method according to any one of the preceding claims, comprising a dirt collecting container (12), which has a suction inlet (18) and is in flow connection with at least one suction unit (16) via at least one filter (24) and at least one suction line (26), and comprising at least one external air inlet (48) which opens into the suction line (26) downstream of the at least one filter (24) and can be closed by means of at least one closing valve (30), the at least one closing valve (30) having a valve body (34) which is movable back and forth between a closed position and an open position and is acted upon by a closing spring (36) with a closing force, the valve body lying against a valve seat in the closed position and being at a distance from the valve seat in the open position, **characterized in that** associated with the valve body (34) is a resilient stop element (43), which acts upon the valve body (34) in the open position with a repulsion force in the direction of the valve seat, the stop element (43) only acting with a force upon the valve body (34) when the latter is disposed at a distance from the valve seat.

8. Vacuum cleaner according to claim 7, **characterized in that** the closing spring (36) is restrained between the valve body (34) and a filter holder (38), the at least one filter (24) being held on the filter holder (38).

9. Vacuum cleaner according to claim 8, **characterized in that** the resilient stop element (43) is disposed on the filter holder (38).

10. Vacuum cleaner according to claim 7, 8 or 9, **characterized in that** the resilient stop element is configured as a stop spring (43).

11. Vacuum cleaner according to claim 10, **characterized in that** the stop spring (43) has a greater spring constant than the closing spring (36).

12. Vacuum cleaner according to claim 10 or 11, **characterized in that** the closing spring (36) and the stop spring (43) are configured as helical springs of different diameters, one of the two helical springs circumferentially surrounding the other helical spring.

13. Vacuum cleaner according to claim 12, **characterized in that** the closing spring (36) circumferentially surrounds the stop spring (43).

14. Vacuum cleaner according to any one of claims 7 to 13, **characterized in that** the closing spring (36) is configured as a helical spring, the diameter of which is at least 1/3 of the diameter of the valve body (34).

15. Vacuum cleaner according to claim 14, **characterized in that** the diameter of the closing spring (36) is at least half the diameter of the valve body (34).

16. Vacuum cleaner according to claim 12 or 13, **characterized in that** the ratio of the diameters of the two helical springs is approximately 1:3.

17. Vacuum cleaner according to any one of claims 7 to 16, **characterized in that** the resilient stop element (43) is configured as a helical spring, and **in that** the valve body (34) has a guiding pin (46), which enters the helical spring.

18. Vacuum cleaner according to any one of claims 7 to 17, **characterized in that** the closing valve (30) has guiding elements (55, 56) for guiding the valve body (34).

19. Vacuum cleaner according to claim 18, **characterized in that** the guiding elements (55, 56) are configured in a cylindrical form.

20. Vacuum cleaner according to claim 18 or 19, **characterized in that** the guiding elements comprise a guiding sleeve (56) and a guiding receptacle (55), the guiding sleeve (56) entering the guiding receptacle (55).

21. Vacuum cleaner according to any one of claims 7 to 20, **characterized in that** the closing valve (30) has a magnetic holder (50), which acts upon the valve body (34) in the closed position with a magnetic holding force.

22. Vacuum cleaner according to claim 21, **characterized in that** the magnetic holder has a controllable electromagnet (50).

23. Vacuum cleaner according to claim 22, **characterized in that** the electromagnet (50) is disposed on a valve holder (32) that forms the valve seat, and **in that** the valve body (34) has a magnetizable element (58) which is associated with the electromagnet (50) and forms a closed magnetic circuit with the electromagnet (50) in the closed position of the valve body (34).

24. Vacuum cleaner according to any one of claims 7 to 23, **characterized in that** the vacuum cleaner (10) has a single filter (24).

25. Vacuum cleaner according to claim 24, **characterized in that** the filter (24) can be acted upon by external air over its entire surface area by opening the closing valve (30).

26. Vacuum cleaner according to any one of claims 7 to 25, **characterized in that** the valve body (34) can be moved continuously from its closed position via its open position back into its closed position.

27. Vacuum cleaner according to any one of claims 7 to 26, **characterized in that** the at least one filter (24) can be acted upon by external air by means of the at least one closing valve (30) for less than 200 milliseconds.

28. Vacuum cleaner according to any one of claims 7 to 27, **characterized in that** the at least one filter (24) can be acted upon by external air by means of the at least one closing valve (30) while maintaining a negative pressure in the region of the opening of a suction hose (20) opening into the suction inlet (18).

## Revendications

1. Procédé pour nettoyer les filtres d'un aspirateur (10), comprenant un réservoir collecteur de saletés (12), lequel présente une entrée d'aspiration (18) et se trouve en relation d'écoulement avec au moins un groupe d'aspiration (16) par le biais d'au moins un filtre (24) et d'au moins une conduite d'aspiration (26), et comprenant au moins une entrée d'air externe (48) débouchant en aval du ou des filtres (24) dans la conduite d'aspiration (26), laquelle entrée peut être fermée avec au mois une vanne de fermeture (30), la ou les vannes de fermeture (30) présentant un corps de vanne (34) mobile en va-et-vient entre une position fermée et une position ouverte et soumis à une force de fermeture par un ressort de fermeture (36), lequel corps, en position fermée, repose sur un siège de vanne et lequel, en position ouverte, est espacé du siège de vanne, au moins une vanne de fermeture (30) s'ouvrant pour le nettoyage du ou des filtres (24) et exposant le côté du ou des filtres (24) opposé au réservoir collecteur de saletés (12) à l'air externe, **caractérisé en ce qu'**on soumet le corps de vanne (24), indépendamment de sa position, à la force de fermeture du ressort de fermeture (36) et, dans une position espacée du siège de vanne, on le soumet en plus à une force de recul d'un élément de butée élastique (43), l'élément de butée élastique (43) n'exposant le corps de vanne (34) à une force que lorsque ce dernier est espacé du siège de vanne.

2. Procédé selon la revendication 1, **caractérisé en ce qu'**on équipe l'aspirateur (10) d'un seul filtre (24).

3. Procédé selon la revendication 1 ou 2, **caractérisé en ce qu'**on expose toute la surface du ou des filtres (24), opposée au réservoir collecteur de saletés (12), à l'air externe en ouvrant une seule vanne de fermeture (30).

4. Procédé selon la revendication 1, 2 ou 3, **caractérisé en ce que** l'actionnement d'au moins une vanne de fermeture (30) est électronique.

5. Procédé selon l'une quelconque des revendications précédentes, **caractérisé en ce que** l'actionnement d'au moins une vanne de fermeture (30) est temporisé.

6. Procédé selon la revendication 5, **caractérisé en ce que** l'actionnement d'au moins une vanne de fermeture (30) s'effectue périodiquement par intervalles de moins de 30 secondes.

7. Aspirateur permettant de mettre en oeuvre le procédé selon l'une quelconque des revendications précédentes, comprenant un réservoir collecteur de saletés (12), lequel présente une entrée d'aspiration (18) et se trouve en relation d'écoulement avec au moins un groupe d'aspiration (16) par le biais d'au moins un filtre (24) et d'au moins une conduite d'aspiration (26), et comprenant au moins une entrée d'air externe (48) débouchant en aval du ou des filtres (24) dans la conduite d'aspiration (26), laquelle entrée peut être fermée avec au mois une vanne de fermeture (30), la ou les vannes de fermeture (30) présentant un corps de vanne (34) mobile en va-et-vient entre une position fermée et une position ouverte, lequel corps est soumis à une force de fermeture par un ressort de fermeture (36) et lequel, en position fermée, repose sur un siège de vanne et qui, en position ouverte, est espacé du siège de vanne, **caractérisé en ce qu'**un élément de butée élastique (43) est associé au corps de vanne (24) et expose le corps de vanne (34) en position ouverte à une force de recul en direction du siège de vanne, l'élément de butée élastique (43) n'exposant le corps de vanne (34) à une force que lorsque ce dernier est espacé du siège de vanne.

8. Aspirateur selon la revendication 7, **caractérisé en ce que** le ressort de fermeture (36) est monté entre le corps de vanne (34) et un élément de retenue de filtre (38), le ou les filtres (24) étant retenus sur l'élément de retenue de filtre (38).

9. Aspirateur selon la revendication 8, **caractérisé en ce que** l'élément de butée élastique (43) est agencé sur l'élément de retenue de filtre (38).

10. Aspirateur selon la revendication 7, 8 ou 9, **caractérisé en ce que** l'élément de butée élastique est conçu comme un ressort de butée (43).

11. Aspirateur selon la revendication 10, **caractérisé en ce que** le ressort de butée (43) présente une constante de raideur supérieure à celle du ressort de fermeture (36).

12. Aspirateur selon la revendication 10 ou 11, **caractérisé en ce que** le ressort de fermeture (36) et le ressort de butée (43) sont conçus comme des ressorts hélicoïdaux présentant différents diamètres, un des deux ressorts hélicoïdaux entourant l'autre ressort hélicoïdal dans la direction circonférentielle.

13. Aspirateur selon la revendication 12, **caractérisé en ce que** le ressort de fermeture (36) entoure le ressort de butée (43) dans la direction circonférentielle.

14. Aspirateur selon l'une quelconque des revendications 7 à 13, **caractérisé en ce que** le ressort de fermeture (36) est conçu comme un ressort hélicoïdal dont le diamètre atteint au moins 1/3 du diamètre du corps de vanne (34).

15. Aspirateur selon la revendication 14, **caractérisé en ce que** le diamètre du ressort de fermeture (36) est au moins la moitié du diamètre du corps de vanne (34).

16. Aspirateur selon la revendication 12 ou 13, **caractérisé en ce que** le rapport entre les diamètres des deux ressorts hélicoïdaux atteint environ 1:3.

17. Aspirateur selon l'une quelconque des revendications 7 à 16, **caractérisé en ce que** l'élément de butée élastique (43) est conçu comme un ressort hélicoïdal et le corps de vanne (34) comprend un tenon de guidage (46) qui s'enfonce dans le ressort hélicoïdal.

18. Aspirateur selon l'une quelconque des revendications 7 à 17, **caractérisé en ce que** la vanne de fermeture (30) comprend des éléments de guidage (55, 56) destinés à guider le corps de vanne (34).

19. Aspirateur selon la revendication 18, **caractérisé en ce que** les éléments de guidage (55, 56) sont cylindriques.

20. Aspirateur selon la revendication 18 ou 19, **caractérisé en ce que** les éléments de guidage comportent un manchon de guidage (56) et un logement de guidage (55), le manchon de guidage (56) s'enfonçant dans le logement de guidage (55).

21. Aspirateur selon l'une quelconque des revendications 7 à 20, **caractérisé en ce que** la vanne de fermeture (30) comprend un élément de retenue magnétique (50) qui expose le corps de vanne (34) en position fermée à une force de retenue magnétique.

22. Aspirateur selon la revendication 21, **caractérisé en ce que** l'élément de retenue magnétique comprend un électroaimant (50) pouvant être commandé.

23. Aspirateur selon la revendication 22, **caractérisé en ce que** l'électroaimant (50) est agencé sur un élément de retenue de vanne (32) qui forme le siège de vanne, et **en ce que** le corps de vanne (34) comprend un élément magnétisable (58) associé à l'électroaimant (50), qui forme avec l'électroaimant (50), en position fermée du corps de vanne (34), un circuit magnétique fermé.

24. Aspirateur selon l'une quelconque des revendications 7 à 23, **caractérisé en ce que** l'aspirateur (10) comprend un seul filtre (24).

25. Aspirateur selon la revendication 24, **caractérisé en ce que** le filtre (24) peut être exposé sur toute sa surface à de l'air externe lorsqu'on ouvre la vanne de fermeture (30).

26. Aspirateur selon l'une quelconque des revendications 7 à 25, **caractérisé en ce que** le corps de vanne (34) peut passer en continu de sa position fermée à sa position ouverte puis revenir à sa position fermée.

27. Aspirateur selon l'une quelconque des revendications 7 à 26, **caractérisé en ce que** le ou les filtres (24) peuvent être exposés à l'air externe pendant moins de 200 millisecondes au moyen de la ou des vannes de fermeture (30).

28. Aspirateur selon l'une quelconque des revendications 7 à 27, **caractérisé en ce que** le ou les filtres (24) peuvent être exposés à l'air externe au moyen de la ou des vannes de fermeture (30) avec conservation d'une dépression dans la zone d'embouchure d'un tuyau d'aspiration (20) débouchant dans l'entrée d'aspiration (18).
